# EUROPEAN PATENT SPECIFICATION

(11) **EP 2 964 931 B1**
(45) Date of publication and mention of the grant of the patent: **05.10.2022**
(21) Application number: 13857656.6
(22) Date of filing: 18.11.2013
(51) Int. Cl.: F02C 7/10, F01D 15/10

(54) **VEHICLE RECUPERATOR**
FAHRZEUGREKUPERATOR
RÉCUPÉRATEUR DE VÉHICULE

(30) Priority: 07.03.2013 US 201361774547 P
(43) Date of publication of application: 13.01.2016
(73) Proprietor: Rolls-Royce Corporation, Indianapolis, Indiana 46225-1103 (US)
(72) Inventor: NORDSTROM, Carl, David, San Jose Dos Campos Sao Paulo, (BR); RODRIGUEZ, Rigoberto, Jorge, Avon, IN 46123 (US)
(74) Representative: Ström & Gulliksson AB
(86) International application number: PCT/US2013/070480
(87) International publication number: WO 2014/137418

(56) References cited:
- GB-A- 578 686
- GB-A- 827 542
- GB-A- 905 664
- US-A- 4 446 694

## Description

### CROSS-REFERENCE TO RELATED APPLICATIONS

This application claims priority to U.S. Provisional Patent Application No. 61/774,547 filed March 7, 2013.

### TECHNICAL FIELD

The present disclosure generally relates to recuperation, and more particularly, but not exclusively, to a recuperator used with a gas turbine engine.

### BACKGROUND

Providing techniques to heat a flow stream of a gas turbine engine remain an area of interest. Some existing systems have various shortcomings relative to certain applications. Accordingly, there remains a need for further contributions in this area of technology. Related background art can be found in US4446694A.

### SUMMARY

According to an aspect, there is provided an apparatus as defined in claim 1. According to another aspect, there is provided a method of operating a gas turbine engine as defined in claim 9. One embodiment of the present disclosure includes a unique recuperator for an engine. Other embodiments include apparatuses, systems, devices, hardware, methods, and combinations for transferring energy to heat a flow stream of a gas turbine engine. Further embodiments, forms, features, aspects, benefits, and advantages of the present application shall become apparent from the description and figures provided herewith.

### BRIEF DESCRIPTION OF THE DRAWINGS

FIG. 1 depicts an embodiment of a gas turbine engine having a recuperator.
FIG. 2 depicts an embodiment of a gas turbine engine having a recuperator.
FIG. 3 depicts an embodiment of a gas turbine engine having a recuperator.
FIG. 4 depicts an embodiment of a gas turbine engine having a recuperator.
FIG. 5 depicts an embodiment of a recuperator of a gas turbine engine.
FIG. 6 depicts an embodiment of a gas turbine engine having a recuperator.

### DETAILED DESCRIPTION

For the purposes of promoting an understanding of the principles of the disclosure, reference will now be made to the embodiments illustrated in the drawings and specific language will be used to describe the same. It will nevertheless be understood that no limitation of the scope of the disclosure is thereby intended. The scope of the invention is defined in the appended claims.

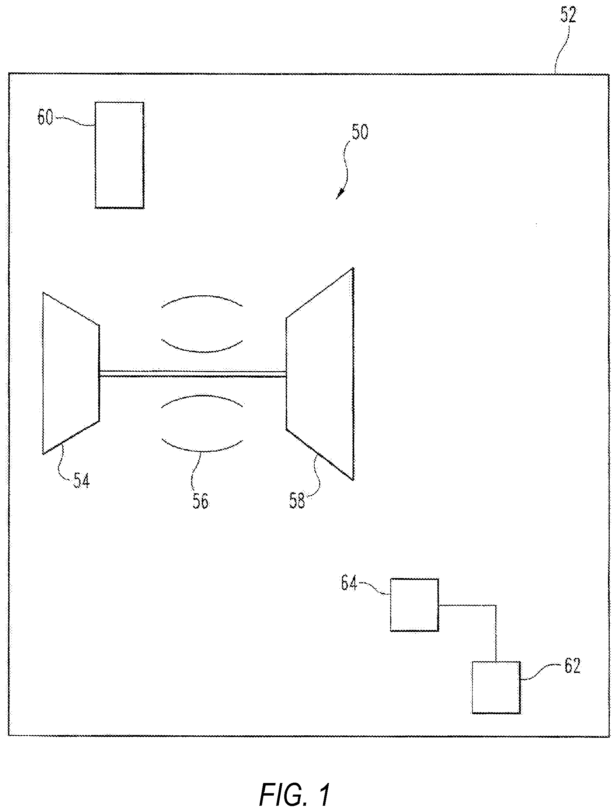

With reference to FIG. 1, there is illustrated a schematic representations of one form of an aircraft engine 50 used as a power plant for an aircraft 52. As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present disclosures are contemplated for utilization in other applications that may not be coupled with an aircraft such as, for example, industrial applications, power generation, pumping sets, naval propulsion and other applications known to one of ordinary skill in the art.

The aircraft engine 50 can be a gas turbine engine as depicted in the illustrated embodiment that includes a compressor 54, combustor 56, and turbine 58. Although depicted as a single spool engine, the gas turbine engine can have a plurality of spools. In some embodiments the gas turbine engine can be an adaptive cycle and/or variable cycle engine and furthermore can take on a variety of forms such as a turbofan engine, turboprop engine, and turboshaft engine. In some embodiments the gas turbine engine can be an axial flow, centrifugal flow, or a hybrid flow engine. In short, the gas turbine engine can have any variety of variations other than that depicted in FIG. 1.

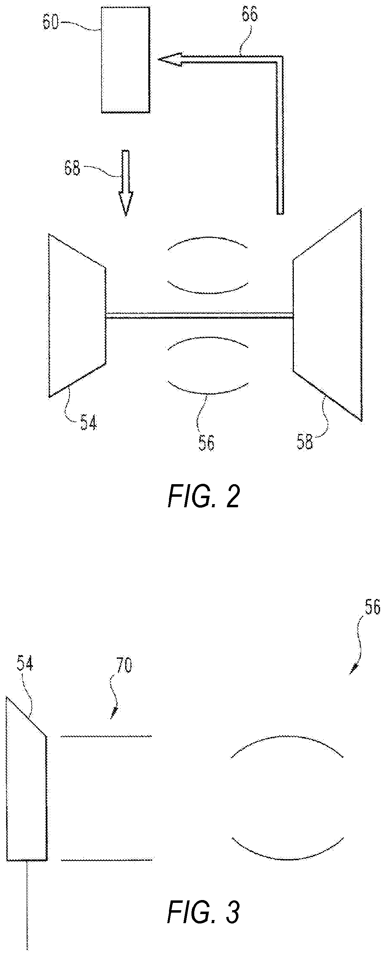

Referring to FIG. 2 and with continuing reference to FIG. 1, the aircraft engine 50 includes a recuperator 60 useful for receiving energy from a flow stream in one location of the gas turbine engine (shown generally as arrow 66) and delivering the energy in the form of thermal energy to a flow stream location between a portion of the compressor and a portion of the turbine (shown generally as arrow 68). To set forth an example, the recuperator 60 is able to provide heating to the gas turbine engine 50 via energy extracted by operation of the turbine 58. In one form the recuperator 60 is powered by electricity generated as a result of rotation of the turbine 58, an embodiment of which is discussed below. Though the recuperator 60 is shown displaced from an engine reference line apart from the compressor 54, combustor 56, or turbine 58, implementations can locate the recuperator 60 in a variety of other locations. In one such location the recuperator 60 is located between the last row of compressor blades and the combustor 56 of the gas turbine engine such that flow stream energy from the gas turbine engine can be used to heat the recuperator 60 and provide thermal energy to that location. An embodiment of such a location is described further below.

The aircraft 52 depicted in FIG. 1 can be capable of operating at a variety of speeds and accordingly includes a sensor 62 and controller 64. The sensor 62 measures aircraft flight condition such as speed and altitude, to set forth just two non-limiting examples, and can output any variety of data whether sensed or calculated. For example, the sensor 62 can sense and output conditions such as static temperature, static pressure, total temperature, and/or total pressure, among possible others. In addition, the flight condition sensor 62 can output calculated values such as, but not limited to, equivalent airspeed, altitude, and Mach number. Any number of other sensed conditions or calculated values can also be output. The flight condition sensor 62 provides data to the controller 64 and can output values in either analog or digital form.

The controller 64 is provided to monitor and control engine operations. The controller 64 can be comprised of digital circuitry, analog circuitry, or a hybrid combination of both of these types. Also, the controller 64 can be programmable, an integrated state machine, or a hybrid combination thereof. The controller 64 can include one or more Arithmetic Logic Units (ALUs), Central Processing Units (CPUs), memories, limiters, conditioners, filters, format converters, or the like which are not shown to preserve clarity. In one form, the controller 64 is of a programmable variety that executes algorithms and processes data in accordance with operating logic that is defined by programming instructions (such as software or firmware). Alternatively or additionally, operating logic for the controller 64 can be at least partially defined by hardwired logic or other hardware. In one particular form, the controller 64 is configured to operate as a Full Authority Digital Engine Control (FADEC); however, in other embodiments it may be organized/configured in a different manner as would occur to those skilled in the art. It should be appreciated that controller 64 can be exclusively dedicated to control of the recuperator 60, or may additionally and/or alternatively be used in the regulation/control/activation of one or more other subsystems or aspects of aircraft 52.

Turning now to FIG. 3, one non-limiting embodiment of a recuperator 60 is shown in which the recuperator is incorporated into a compressor discharge 70 located downstream from the last rotating component of the compressor 54. For example, the last rotating component of the compressor 54 can be the last bladed row in an axial flow compressor, but could also be the location downstream of a centrifugal compressor. The compressor discharge 70 can include any flow path structure disposed between the last rotating component of the compressor 54 and the combustor 56. For example, the compressor discharge 70 can extend from the last row of compressor blades to a relative open area in which includes fuel nozzles and other components that are generally considered the combustor of the gas turbine engine. In one form the discharge can include a diffuser useful in slowing the velocity of a compressor discharge flow and raising its static pressure. The discharge 70 can alternatively and/or additionally include associated components such as struts and vanes. In one form the discharge can take the form of a tube. Any portion of the compressor discharge 70 can be used as the recuperator 60 to add thermal energy to a flow stream passing from the compressor 54 to the combustor 56.

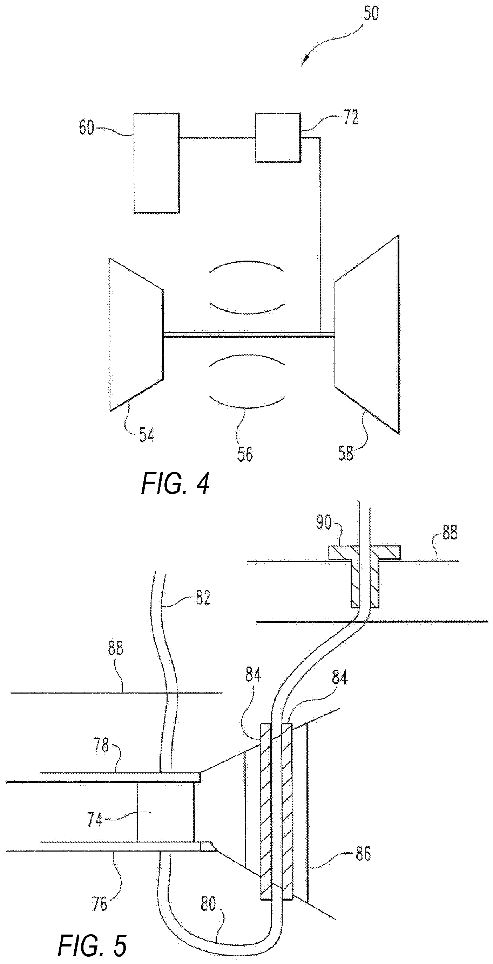

FIG. 4 depicts one embodiment of a gas turbine engine 50 having an electrically powered recuperator 60 that is configured to develop a heat transfer with a stream of working fluid in a flow path of the gas turbine engine 50. The recuperator 60 can be driven by an electrical generator 72 that receives power from the gas turbine engine 50. The turbine 58 can be used to extract work from a flow stream of the gas turbine engine which in turn drives a shaft in rotational communication with the electrical generator 72. Other devices capable of providing energy to the recuperator 60 are also contemplated. The generator 72 can be coupled with the gas turbine engine 50 using a variety of shafts, gearings, transmissions, clutches, etc. In one non-limiting form the generator 72 is coupled to a spool shaft of the gas turbine engine 50 using a bevel gearing.

Turning now to FIG. 5, one embodiment of a recuperator 60 is shown disposed with the compressor discharge 70 in which the recuperator 60 includes a vane 74 of the discharge 70. The vane can include an aerodynamic shape such as an airfoil, and in some embodiments can have an identical form, fit, and aerodynamic function as a vane that is not configured as a recuperator 60. The same form, fit, and function equivalence can be used when other components serve as the recuperator 60. The vane 74 of the recuperator 60 is part of a vane assembly having an inner band 76 and an outer band 78, each of which serves as a power bus to deliver electricity to the vane 74. The vane 74 can be made from a variety of electrically conductive materials, one of which is nickel chromium. A conduit 80 is in electrical communication with the inner band 76 and a conduit 82 is in electrical communication with the outer band 78. A seal 84 can be used to isolate the conduits from engine structure. The seal 84 can be a ceramic isolating seal but other forms are also contemplated herein. Although the conduit 80 is shown adjacent a seal 84, either or both of the conduits 80 and 82 can be used with a isolating seal to prevent, among other potential possibilities, unintended electrical connection with one or more gas turbine engine conductive components. The conduit 80, furthermore, is depicted as being routed through a strut 86, but other locations are also contemplated in which the conduit 80 can be routed to a radially outer portion of the gas turbine engine 50. In some embodiments the conduits 80 and 82 need not take the form of electrical cabling but rather can additionally and/or alternatively take other shapes and or be coupled with metallic components of the gas turbine engine 50 as part of an electrical pathway.

Either or both the conduits 80 and 82 can be routed through a casing 88 of the gas turbine engine 50. In one non-limiting example, the conduit 82 is shown being routed through the casing 88 via an opening. The opening can further include a seal such as a seal 84. The conduit 80 is shown being routed through a bolt 90 having a passage for such purposes. The bolt 90 can be a casing bolt in one non-limiting example. Either or both of the conduits 82 can be routed through the casing 88 using any variety of techniques.

The gas turbine engine 50, recuperator 60, and/or associated equipment can take a variety of forms. In one non-limiting embodiment the recuperator 60 can take the form of an exit vane of an AE1007 gas turbine engine available from Rolls-Royce Corporation, Indianapolis, IN. In another non-limiting embodiment the recuperator can take the form of a compressor discharge tube associated with an M250 engine available from Rolls-Royce Corporation, Indianapolis, IN. In yet another non-limiting embodiment an electrical generator can be coupled with a reduction gearbox assembly of an AE2100 engine, available from Rolls-Royce Corporation, Indianapolis, IN, and modifying the core of the engine in similar fashion to the AE1007 described above. Still another non-limiting embodiment is to modify a T56 engine, available from Rolls-Royce Corporation, Indianapolis, IN, or an industrial 501 engine, available from Rolls-Royce Corporation, Indianapolis, IN, by installing an electrical generator on an engine output shaft and modifying the core in similar fashion to the AE1007 above. Still yet a further non-limiting embodiment includes modifying an LHTEC T800 engine by using a recuperator as one or more scroll outlet guide vanes.

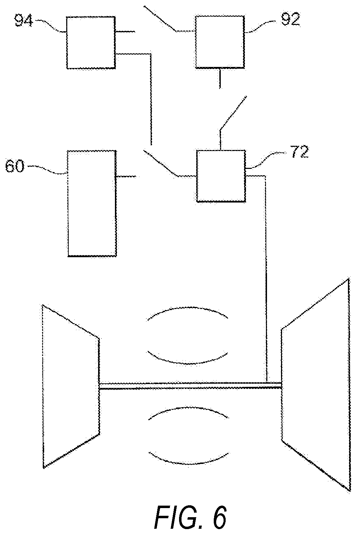

FIG. 6 depicts one non-limiting embodiment of the gas turbine engine 50 having the recuperator 60 and configured with the generator 72, an energy storage device 92, and a load 94. The energy storage device 92 can be any suitable device useful for storing energy for later use, examples of which include chemical, potential, and kinetic energy, or combinations thereof, to set forth just a few non-limiting examples. In one form the energy storage device 92 can be one or more batteries. The load 94 can be any device that uses energy. For example, the load 94 can be a motor or a weapon, to set forth just two non-limiting examples.

In the illustrated embodiment the generator 72 is configured to selectively provide electrical power to the recuperator 60 as well as to the energy storage device 92 depending on requirements at any given time. Furthermore, the energy storage device can be configured to selectively provide electrical power to the load 94 depending on requirements. Although the selective nature of the power provided to the various components is depicted as switches, any variety of implementation is contemplated herein.

The gas turbine engine 50 and one or more devices in the illustrated embodiment can be operated in a number of different modes. The controller 64 can be configured to include one or more sets of instructions that enable the gas turbine engine 50 and associated devices to be operated to selectively provide power to either the recuperator 60 or the load 94. In one mode of operation the gas turbine engine is placed in an idle condition in which relatively little power is produced and relatively little is required. In this mode little to no power is provided to either the recuperator 60 or the load 94. In another mode of operation the gas turbine engine 50 is operated in a heightened idle mode in which a fuel flow is increased to the gas turbine engine and the recuperator 60 is used to provide thermal energy back to a flow stream of the gas turbine engine 50. In this mode little to no power is provided to the load 94. The energy storage device 92 can be charged to store energy during this heightened mode. If it is desired to operate the gas turbine engine 50 in a power mode, fuel flow can be further increased to the gas turbine engine 50, power can be diverted from the recuperator 60 toward the load 94, and the energy storage device 92 can be used to supplement power to the load 94. In this mode little to no power can be provided to the recuperator 60. When the load 94 ceases its requirement for power the system can be returned to the idle or heightened idle mode in which the generator 72 can be used to recharge the energy storage device 92, it can additionally and/or alternatively be used to power the recuperator 60, and/or a fuel flow to the engine can be reduced to provide a similar state as that existed in the heighted idle or idle mode. The embodiment and technique of operating the system described in FIG. 6 can be used with a single spool gas turbine engine or a multi-spool gas turbine engine.

In one aspect the present application provides an apparatus comprising a gas turbine engine having a compressor and combustor, the compressor including a rotating blade adjacent a compressor exit flow path, a turbine structured to rotate and provide power to an electric generator, and an electrically powered compressor discharge component connected with the compressor exit flow path, the electrically powered compressor discharge component in communication with the electric generator and disposed downstream from the rotating blade, the discharge component configured to transfer heat with a working fluid traversing the compressor en route to the combustor.

A feature of the present application provides wherein the heat transfer occurs when the electrically powered compressor discharge component is subject to a potential difference between terminals, and wherein the electrically powered compressor discharge component is one of a compressor exit vane and a discharge tube.

Another feature of the present application provides wherein the terminals are at a radially inner end of the electrically powered compressor discharge component and a radially outer end of the electrically powered compressor discharge component.

Yet another feature of the present application provides wherein the gas turbine engine includes a plurality of electrically powered compressor discharge components, and wherein at least one of the plurality of electrically powered compressor discharge components includes an electrical conduit routed from the radially inner end through a gas turbine engine flow path.

Still another feature of the present application includes a controller structured to place the gas turbine engine in an idle mode, a loaded idle mode, and a power mode, wherein the electrically powered compressor discharge component is configured in an off condition in the idle mode and power mode and is configured in an on condition in the loaded idle mode.

Yet still another feature of the present application includes an energy storage component configured to provide energy useful in transitioning the gas turbine engine from the loaded idle mode to the power mode.

A further feature of the present application provides wherein the turbine is connected to a low pressure spool of the gas turbine engine.

In another aspect the present application provides an apparatus comprising a gas turbine engine having a compressor coupled to rotate with a turbine and a combustor structured to provide heat to a working fluid of the gas turbine engine, the gas turbine engine also including a compressor discharge having an electrical heating element operable to transfer a heat to the working fluid of the gas turbine engine.

A feature of the present application provides wherein the electrical heating element is one of a vane and a tube.

Another feature of the present application includes a first electrical conductor having a first polarity coupled to the electrical heating element at a radially inner side of the compressor discharge, and a second electrical conductor having a second polarity coupled to the electrical heating element at a radially outer side of the compressor discharge.

Yet another feature of the present application provides wherein the first electrical conductor is routed from the radially inner side to the radially outer side through a strut of the compressor discharge.

Still yet another feature of the present application provides wherein at least one of the first electrical conductor and second electrical conductor penetrates a compressor case via a bolt that passes through the compressor case.

Yet still another feature of the present application provides wherein the electrical heating element is isolated from metallic engine structure using a ceramic element.

A further feature of the present application includes a plurality of electrical heating elements, and wherein the gas turbine engine is a multi-spool engine.

In yet a further aspect the present application provides an apparatus comprising a gas turbine engine having a compressor, combustor and turbine coupled with an electric generator, the gas turbine engine also having a recuperator in thermal communication with a flow path of the gas turbine engine, an energy storage device, and a load structured to receive power from the electric generator and the energy storage device.

A feature of the present application provides wherein the recuperator is an electrically driven recuperator disposed in a compressor discharge of the gas turbine engine.

Another feature of the present application provides wherein the electrically driven recuperator includes a first terminal radially inward of the flow path and a second terminal radially outward of the flow path.

Yet another feature of the present application provides wherein the recuperator is electrically powered and disposed upstream of the turbine, which further includes a ceramic insulator to separate an electrical component of the recuperator from metallic structure of the gas turbine engine, and wherein the recuperator is in selective thermal communication with the flow path.

Yet still another feature of the present application includes a controller capable of: operating the gas turbine engine in a first mode having a fist fuel flow rate, operating the gas turbine engine in a second mode having a second fuel flow rate, the second mode characterized in that the recuperator is configured to provide heat to the flow path, and
operating the gas turbine engine in third mode having a third fuel flow rate, the third mode characterized in that the electric generator provides substantially all power to the load.

A further feature of the present application provides wherein the controller is further capable of supplying power from both the electric generator and the energy storage device to the load during a transition from the second mode to the third mode, and wherein the recuperator is an electrically powered recuperator.

A still further feature of the present application provides wherein the energy storage device is structured to convert energy from a first form to an electrical form.

Yet a still further feature of the present application provides wherein the first form is one of a chemical and a mechanical form.

In yet a further aspect the present application provides a method comprising operating a gas turbine engine at a first power condition, the gas turbine engine including a combustor and a turbine, increasing a fueling of the gas turbine engine to operate at a second power condition, energizing a recuperator from energy of the turbine at the second power condition, powering a load at a third power condition of the gas turbine engine, the powering including: reducing energy supplied to the recuperator relative to the second power condition, and receiving power from an energy storage device.

A feature of the present application includes increasing a fuel flow rate of the gas turbine engine to operate at the third power condition.

Another feature of the present application includes accelerating compressor of the gas turbine engine when transitioning between the second power condition and the third power condition, and wherein the recuperator is an electrically driven recuperator.

Yet another feature of the present application provides wherein the recuperator is electrically driven, and which further includes routing an electrical charge through a flow path of the gas turbine engine.

Still yet another feature of the present application provides wherein the routing includes conveying the electrical charge through a strut of a compressor discharge.

A further feature of the present application provides wherein the recuperator is electrically powered, and wherein one of a compressor airfoil shaped member and a compressor tube.

A still further feature of the present application includes recharging the energy storage device.

Yet still a further feature of the present application provides wherein the powering includes receiving power from an electrical generator, wherein the recuperator is electrically powered, and wherein the electrical generator is capable of providing power to the electrically powered recuperator during the second power condition.

While the disclosure has been illustrated and described in detail in the drawings and foregoing description, the same is to be considered as illustrative and not restrictive in character, it being understood that only the preferred embodiments have been shown and described and that the scope of the invention is defined in the appended claims.

## Claims

1. An apparatus (52) comprising:
a gas turbine engine (50) having a compressor (54) and a combustor (56), the compressor (54) including a rotating blade adjacent a compressor exit flow path (70);
an electric generator (72);
a turbine (58) structured to rotate and provide power to the electric generator (72);
an electrically powered recuperator (60) connected with the compressor exit flow path (70), the electrically powered recuperator (60) in communication with the electric generator (72) and disposed downstream from the rotating blade, the recuperator (60) configured to transfer heat with a working fluid traversing the compressor (54) en route to the combustor (56); and
a controller (64) configured to include one or more sets of instructions that enable the gas turbine engine (50) and associated devices to be operated to selectively provide power to either the recuperator (60) or a load (94), whereby said controller (64) is structured to place the gas turbine engine (50) in:
an idle mode,
a loaded idle mode in which a fuel flow to the gas turbine engine (50) is increased relative to the idle mode and power is provided from the turbine (58) to the recuperator (60), and in which an energy storage device (92) may be charged to store energy, and
a power mode in which a fuel flow to the gas turbine engine (50) is increased relative to the loaded idle mode and power is diverted from the recuperator (60) toward the load (94), and the energy storage device (92) may be used to supplement power to the load (94),
wherein the electrically powered recuperator (60) is configured in an off condition in the idle mode and power mode and is configured in an on condition in the loaded idle mode.

2. The apparatus (52) according to claim 1, wherein the heat transfer occurs when the electrically powered recuperator (60) is subject to a potential difference between terminals (76, 78), and wherein the electrically powered recuperator (60) is one of a compressor exit vane (74) and a discharge tube.

3. The apparatus (52) according to claim 2, wherein the terminals (76, 78) are at a radially inner end (76) of the electrically powered recuperator (60, 74) and a radially outer end (78) of the electrically powered recuperator (60, 74).

4. The apparatus (52) according to claim 3, wherein the gas turbine engine (50) includes a plurality of electrically powered recuperators (60, 74), and wherein at least one of the plurality of electrically powered recuperators (60, 74) includes an electrical conduit (80, 82) routed from the radially inner end (76) through a gas turbine engine flow path.

5. The apparatus (52) according to any one of the claims 1 to 4, which further includes an energy storage component (92) configured to provide energy useful in transitioning the gas turbine engine (50) from the loaded idle mode to the power mode.

6. The apparatus (52) according to claim 4, wherein the terminals (76, 78) include a first terminal (76) having a first polarity coupled to the electrically powered recuperators (60, 74) at a radially inner side of the compressor exit flow path (70), and a second terminal (78) having a second polarity coupled to the electrically powered recuperators (60, 74) at a radially outer side of the compressor exit flow path (70).

7. The apparatus (52) according to claim 6, wherein the first terminal (76) is routed from the radially inner side to the radially outer side through a strut (86) of the compressor exit flow path (70).

8. The apparatus (52) according to any one of claims 6 and 7, wherein at least one of the first terminal (76) and the second terminal (78) penetrates a compressor case (88) via a bolt (90) that passes through the compressor case (88).

9. A method of operating a gas turbine engine (50) comprising:
operating a gas turbine engine (50) at a first power condition, the gas turbine engine (50) including a combustor (56), a turbine (58) and a recuperator (60), the recuperator (60) being in an off condition in the first power condition;
increasing a fueling of the gas turbine engine (50) to operate at a second power condition;
energizing the recuperator (60) driven by an electrical generator (72) from energy of the turbine (58) at the second power condition;
increasing a fueling of the gas turbine engine (50) relative to the second power condition to operate at a third power condition and powering a load (94) the powering including:
setting the recuperator (60) in an off condition;
condition; and, optionally, receiving power from an energy storage device (92).

10. The method according to claim 9, which further includes accelerating a compressor (54) of the gas turbine engine (50) when transitioning between the second power condition and the third power condition, and wherein the recuperator (60) is an electrically driven recuperator.

11. The method according to any one of claims 9 to 10, wherein the recuperator (60) is electrically driven, and which further includes routing an electrical charge (80, 82) through a flow path (70) of the gas turbine engine (50).

12. The method according to claim 11, wherein the routing includes conveying the electrical charge through a strut (86) of a compressor discharge (70).

13. The method according to any one of claims 9 to 12, wherein the recuperator (60) is electrically powered, and includes one of a compressor airfoil shaped member (74) and a compressor tube.

## Patentansprüche

1. Einrichtung (52) umfassend:
eine Gasturbine (50) mit einem Verdichter (54) und einer Brennkammer (56), wobei der Verdichter (54) angrenzend an einen Verdichteraustritt-Strömungsweg (70) eine Laufschaufel aufweist;
einen elektrischen Generator (72);
eine Turbine (58), die so aufgebaut ist, dass sie sich dreht und dem elektrischen Generator (72) Leistung zuführt;
einen elektrisch betriebenen Rekuperator (60), der mit dem Verdichteraustritt-Strömungsweg (70) verbunden ist, wobei der elektrisch betriebene Rekuperator (60) mit dem elektrischen Generator (72) in Verbindung steht und der Laufschaufel nachgeschaltet angeordnet ist, wobei der Rekuperator (60) dazu ausgestaltet ist, Wärme mit einem Arbeitsfluid zu übertragen, das durch den Verdichter (54) in Richtung der Brennkammer (56) strömt; und
eine Steuerung (64), die dazu ausgestaltet ist, einen oder mehrere Befehlssätze aufzuweisen, die ermöglichen, dass die Gasturbine (50) und zugehörige Vorrichtungen so betrieben werden, dass sie selektiv entweder dem Rekuperator (60) oder einem Verbraucher (94) Leistung zuführen, wobei die Steuerung (64) so aufgebaut ist, dass sie die Gasturbine (50) in Folgendes versetzt:
einen Leerlaufmodus,
einen Lastleerlaufmodus, in dem ein Brennstoffdurchfluss zu der Gasturbine (50) bezogen auf den Leerlaufmodus erhöht ist und Leistung von der Turbine (58) dem Rekuperator (60) zugeführt wird und in dem eine Energiespeichervorrichtung (92) geladen werden und so Energie speichern kann, und
einen Leistungsmodus, in dem ein Brennstoffdurchfluss zu der Gasturbine (50) bezogen auf den Lastleerlaufmodus erhöht ist und Leistung von dem Rekuperator (60) hin zu dem Verbraucher (94) umgeleitet wird und die Energiespeichervorrichtung (92) für zusätzliche Leistung für den Verbraucher (94) eingesetzt werden kann,
wobei der elektrisch betriebene Rekuperator (60) in dem Leerlaufmodus und in dem Leistungsmodus in einem ausgeschalteten Zustand ausgestaltet ist und in dem Lastleerlaufmodus in einem eingeschalteten Zustand ausgestaltet ist.

2. Einrichtung (52) nach Anspruch 1, wobei die Wärmeübertragung erfolgt, wenn an dem elektrisch betriebenen Rekuperator (60) zwischen Anschlüssen (76, 78) eine Potenzialdifferenz vorliegt, und wobei der elektrisch betriebene Rekuperator (60) eines aus einer Verdichteraustritt-Leitschaufel (74) und einem Druckrohr ist.

3. Einrichtung (52) nach Anspruch 2, wobei sich die Anschlüsse (76, 78) an einem radial innenliegenden Ende (76) des elektrisch betriebenen Rekuperators (60, 74) und einem radial außenliegenden Ende (78) des elektrisch betriebenen Rekuperators (60, 74) befinden.

4. Einrichtung (52) nach Anspruch 3, wobei die Gasturbine (50) eine Mehrzahl von elektrisch betriebenen Rekuperatoren (60, 74) aufweist und wobei mindestens einer der Mehrzahl von elektrisch betriebenen Rekuperatoren (60, 74) eine elektrische Leitung (80, 82) aufweist, die von dem radial innenliegenden Ende (76) aus durch einen Gasturbinen-Strömungsweg geführt ist.

5. Einrichtung (52) nach einem der Ansprüche 1 bis 4, die ferner ein Energiespeicherbauteil (92) aufweist, das dazu ausgestaltet ist, Energie zu liefern, die beim Übergang der Gasturbine (50) aus dem Lastleerlaufmodus in den Leistungsmodus nutzbar ist.

6. Einrichtung (52) nach Anspruch 4, wobei die Anschlüsse (76, 78) einen ersten Anschluss (76) mit einer ersten Polarität, der mit den elektrisch betriebenen Rekuperatoren (60, 74) an einer radial innenliegenden Seite des Verdichteraustritt-Strömungswegs (70) verbunden ist, und einen zweiten Anschluss (78) mit einer zweiten Polarität, der mit den elektrisch betriebenen Rekuperatoren (60, 74) an einer radial außenliegenden Seite des Verdichteraustritt-Strömungswegs (70) verbunden ist, aufweisen.

7. Einrichtung (52) nach Anspruch 6, wobei der erste Anschluss (76) von der radial innenliegenden Seite aus über eine Strebe (86) des Verdichteraustritt-Strömungswegs (70) zu der radial außenliegenden Seite geführt ist.

8. Einrichtung (52) nach einem der Ansprüche 6 und 7, wobei mindestens einer aus dem ersten Anschluss (76) und dem zweiten Anschluss (78) über einen Bolzen (90), der durch ein Verdichtergehäuse (88) verläuft, in das Verdichtergehäuse (88) hineinreicht.

9. Verfahren zum Betreiben einer Gasturbine (50), umfassend:
Betreiben einer Gasturbine (50) in einem ersten Leistungszustand, wobei die Gasturbine (50) eine Brennkammer (56), eine Turbine (58) und einen Rekuperator (60) aufweist, wobei sich der Rekuperator (60) in dem ersten Leistungszustand in einem ausgeschalteten Zustand befindet;
Erhöhen einer Brennstoffversorgung der Gasturbine (50) zum Betreiben in einem zweiten Leistungszustand;
Zuführen von Energie aus der Turbine (58) zu dem Rekuperator (60), der von einem elektrischen Generator (72) angetrieben wird, in dem zweiten Leistungszustand;
Erhöhen einer Brennstoffversorgung der Gasturbine (50) bezogen auf den zweiten Leistungszustand zum Betreiben in einem dritten Leistungszustand und Versorgen eines Verbrauchers (94) mit Leistung, wobei das Versorgen mit Leistung Folgendes umfasst:
Versetzen des Rekuperators (60) in einen ausgeschalteten Zustand; und gegebenenfalls Empfangen von Leistung aus einer Energiespeichervorrichtung (92).

10. Verfahren nach Anspruch 9, das ferner ein Beschleunigen eines Verdichters (54) der Gasturbine (50) beim Übergang zwischen dem zweiten Leistungszustand und dem dritten Leistungszustand umfasst, und wobei der Rekuperator (60) ein elektrisch betriebener Rekuperator ist.

11. Verfahren nach einem der Ansprüche 9 bis 10,
wobei der Rekuperator (60) elektrisch betrieben ist und das ferner ein Leiten einer elektrischen Ladung (80, 82) durch einen Strömungsweg (70) der Gasturbine (50) umfasst.

12. Verfahren nach Anspruch 11, wobei das Leiten ein Führen der elektrischen Ladung durch eine Strebe (86) eines Verdichterausgangs (70) umfasst.

13. Verfahren nach einem der Ansprüche 9 bis 12, wobei der Rekuperator (60) elektrisch betrieben ist und eines aus einem verdichterschaufelförmigen Element (74) und einem Verdichterstutzen aufweist.

## Revendications

1. Appareil (52) comprenant :
un moteur à turbine à gaz (50) ayant un compresseur (54) et une chambre de combustion (56), le compresseur (54) incluant une pale rotative adjacente à un trajet d'écoulement de sortie de compresseur (70) ;
un générateur électrique (72) ;
une turbine (58) structurée pour tourner et alimenter en puissance le générateur électrique (72) ;
un récupérateur alimenté électriquement (60) relié au trajet d'écoulement de sortie de compresseur (70), le récupérateur alimenté électriquement (60) étant en communication avec le générateur électrique (72) et disposé en aval de la pale tournante, le récupérateur (60) étant configuré pour transférer de la chaleur avec un fluide de travail traversant le compresseur (54) en route vers la chambre de combustion (56) ; et
un dispositif de commande (64) configuré pour inclure un ou plusieurs ensembles d'instructions qui permettent au moteur à turbine à gaz (50) et aux dispositifs associés d'être actionnés pour alimenter sélectivement en puissance l'un ou l'autre du récupérateur (60) ou d'une charge (94), selon lequel ledit dispositif de commande (64) est structuré pour placer le moteur à turbine à gaz (50) dans :
un mode inactif,
un mode inactif chargé dans lequel un écoulement de carburant vers le moteur à turbine à gaz (50) est augmenté par rapport au mode inactif et une puissance est fournie de la turbine (58) au récupérateur (60), et dans lequel un dispositif de stockage d'énergie (92) peut être chargé pour stocker de l'énergie, et
un mode de puissance dans lequel un écoulement de carburant vers le moteur à turbine à gaz (50) est augmenté par rapport au mode inactif chargé et une puissance est déviée du récupérateur (60) vers la charge (94), et le dispositif de stockage d'énergie (92) peut être utilisé pour compléter l'alimentation en puissance de la charge (94),
dans lequel le récupérateur alimenté électriquement (60) est configuré dans un état éteint dans le mode inactif et le mode de puissance et est configuré dans un état allumé dans le mode inactif chargé.

2. Appareil (52) selon la revendication 1, dans lequel le transfert de chaleur se produit lorsque le récupérateur alimenté électriquement (60) est soumis à une différence de potentiel entre des bornes (76, 78), et dans lequel le récupérateur alimenté électriquement (60) est l'un d'une aube de sortie de compresseur (74) et d'un tube de décharge.

3. Appareil (52) selon la revendication 2, dans lequel les bornes (76, 78) sont à une extrémité radialement interne (76) du récupérateur alimenté électriquement (60, 74) et une extrémité radialement externe (78) du récupérateur alimenté électriquement (60, 74).

4. Appareil (52) selon la revendication 3, dans lequel le moteur à turbine à gaz (50) inclut une pluralité de récupérateurs alimenté électriquement (60, 74), et dans lequel au moins un de la pluralité de récupérateurs alimenté électriquement (60, 74) inclut un conduit électrique (80, 82) acheminé depuis l'extrémité radialement interne (76) à travers un trajet d'écoulement de moteur à turbine à gaz.

5. Appareil (52) selon l'une quelconque des revendications 1 à 4, qui inclut en outre un composant de stockage d'énergie (92) configuré pour fournir de l'énergie utile pour faire passer le moteur à turbine à gaz (50) du mode inactif chargé au mode de puissance.

6. Appareil (52) selon la revendication 4, dans lequel les bornes (76, 78) incluent une première borne (76) ayant une première polarité couplée aux récupérateurs alimenté électriquement (60, 74) au niveau d'un côté radialement interne du trajet d'écoulement de sortie de compresseur (70), et une seconde borne (78) ayant une seconde polarité couplée aux récupérateurs alimenté électriquement (60, 74) au niveau d'un côté radialement externe du trajet d'écoulement de sortie de compresseur (70).

7. Appareil (52) selon la revendication 6, dans lequel la première borne (76) est acheminée du côté radialement interne vers le côté radialement externe à travers une entretoise (86) du trajet d'écoulement de sortie de compresseur (70).

8. Appareil (52) selon l'une quelconque des revendications 6 et 7, dans lequel au moins une de la première borne (76) et de la seconde borne (78) pénètre dans un carter de compresseur (88) via un boulon (90) qui passe à travers le carter de compresseur (88).

9. Procédé de fonctionnement d'un moteur à turbine à gaz (50) comprenant :
le fonctionnement d'un moteur à turbine à gaz (50) à un premier état de puissance, le moteur à turbine à gaz (50) incluant une chambre de combustion (56), une turbine (58) et un récupérateur (60), le récupérateur (60) étant dans un état éteint dans la premier état de puissance ;
l'augmentation d'une alimentation en carburant du moteur de turbine à gaz (50) pour un fonctionnement à un deuxième état de puissance ;
l'activation du récupérateur (60) entraîné par un générateur électrique (72) à partir de l'énergie de la turbine (58) au deuxième état de puissance ;
l'augmentation d'une alimentation en carburant du moteur à turbine à gaz (50) par rapport au second état de puissance pour un fonctionnement dans un troisième état de puissance et l'alimentation d'une charge (94), l'alimentation incluant :
le réglage du récupérateur (60) dans un état éteint ; et éventuellement,
la réception de puissance à partir d'un dispositif de stockage d'énergie (92).

10. Procédé selon la revendication 9, qui inclut en outre l'accélération d'un compresseur (54) du moteur à turbine à gaz (50) lors du passage entre le deuxième état de puissance et le troisième état de puissance, et dans lequel le récupérateur (60) est un récupérateur entraîné électriquement.

11. Procédé selon l'une quelconque des revendications 9 à 10, dans lequel le récupérateur (60) est entraîné électriquement, et qui inclut en outre l'acheminement d'une charge électrique (80, 82) à travers un trajet d'écoulement (70) du moteur à turbine à gaz (50).

12. Procédé selon la revendication 11, dans lequel l'acheminement inclut le passage de la charge électrique à travers une entretoise (86) d'une sortie de compresseur (70).

13. Procédé selon l'une quelconque des revendications 9 à 12, dans lequel le récupérateur (60) est alimenté électriquement, et inclut un d'un élément en forme d'aube de compresseur (74) et d'un tube de compresseur.
